# FASCICULE DE BREVET EUROPEEN

(11) **EP 2 956 727 B1**
(45) Date de publication et mention de la délivrance du brevet: **26.04.2017**
(21) Numéro de dépôt: 14706804.3
(22) Date de dépôt: 17.02.2014
(51) Int. Cl.: F27B 14/06, F27B 14/10, F27B 14/14, F27D 11/06

(54) **FOUR A INDUCTION ET PROCEDE DE TRAITEMENT DES DECHETS METALLIQUES A ENTREPOSER**
INDUKTIONSOFEN UND VERFAHREN ZUR BEHANDLUNG VON ZU LAGERNDEN METALLABFÄLLEN
INDUCTION FURNACE AND METHOD FOR TREATING METAL WASTE TO BE STORED

(30) Priorité: 18.02.2013 FR 1351358
(43) Date de publication de la demande: 23.12.2015
(73) Titulaire: Commissariat à l'Énergie Atomique et aux Énergies Alternatives, 75015 Paris (FR); AREVA NC, 92400 Courbevoie (FR)
(72) Inventeur: BOEN, Roger, F-30130 Saint-Alexandre (FR); BONNETIER, Armand, F-84100 Orange (FR)
(74) Mandataire: Brevalex
(86) Numéro de dépôt international: PCT/EP2014/053027
(87) Numéro de publication internationale: WO 2014/125107

(56) Documents cités:
- WO-A2-03/067166
- DE-A1- 2 243 769
- FR-A- 1 292 863
- GB-A- 2 161 591
- JP-A- 2012 068 017
- US-B1- 6 393 044
- US-B1- 7 197 061
- DÖTSCH E: "Les fours électriques de fusion, de maintien et de coulée", FONDERIE MAGAZINE,, no. 9, 1 novembre 2010 (2010-11-01), pages 37-46, XP001577134, ISSN: 2106-7635

## Description

L'invention présente ressortit à un four à induction, destiné à la fusion de déchets métalliques, ainsi qu'à un procédé de traitement de tels déchets métalliques.

Certains déchets métalliques ou autres doivent être entreposés pendant de longues durées dans des conteneurs appropriés, en raison d'une fraction dangereuse, contaminée ou toxique, qu'ils contiennent. La fusion préliminaire des déchets est avantageuse afin de réduire leur volume. De plus, elle permet de répartir les éléments contaminants plus réductibles que le métal dans tout le volume du lingot qu'on obtient finalement, et de transférer les éléments contaminants plus oxydables que le métal dans un laitier de composition adaptée, si possible à base d'oxyde. On obtient ainsi de bonnes propriétés de confinement, en réduisant la surface libre du métal exposée à la corrosion, et ainsi le risque d'oxydation future des éléments dangereux.

Les fours de fusion sont de genres variés. On utilise souvent le chauffage par induction, et un enroulement inducteur est disposé alors autour d'un creuset dans lequel les déchets sont versés. L'inducteur produit des courants électriques de grande intensité dans les déchets et un échauffement suffisant à la fusion. Le creuset doit souvent être refroidi par une circulation permanente de fluide froid, normalement de l'eau, qui occupe des conduits accolés au creuset ou percés dans le creuset. Un exemple d'un tel four à induction est décrit dans le brevet FR-2 835 620-A.

Le concepteur se heurte à diverses difficultés. Le creuset est d'abord soumis à des efforts thermiques, chimiques et mécaniques importants, produits par la chaleur du bain fondu, ses propriétés corrosives et les dilatations différentielles consécutives à la faible distance séparant le bain fondu du circuit de refroidissement. La face intérieure du creuset, qui est la plus exposée aux dommages puisqu'elle est baignée par le bain fondu, est souvent constituée d'un revêtement réfractaire en céramique, le reste du creuset étant métallique, mais des risques de décollement entre le métal et la céramique, ou d'émiettage de celle-ci, subsistent, les dilatations différentielles étant particulièrement importantes à leur interface. Il faut encore se prémunir contre une rupture du creuset, qui mènerait à un mélange entre le bain fondu et l'eau de refroidissement. Les efforts subis par le creuset peuvent conduire à son usure prématurée ou même à sa rupture, puis à un mélange périlleux entre le bain fondu et l'eau de refroidissement.

Il faut encore se prémunir contre une consommation excessive d'énergie d'induction par une production de courants parasites dans la paroi du creuset. On y remédie souvent par une sectorisation du creuset, c'est-à-dire sa division en secteurs angulaires, séparés par des joints isolants, mais des difficultés supplémentaires apparaissent encore à la face interne du creuset, où ces joints sont exposés au bain fondu, et les problèmes découlant des dilatations différentielles sont accrus par la multiplication d'interfaces de matériaux différents. Une telle conception est exposée dans WO-03/067 166-A, où les secteurs sont revêtus de céramique, sans que les problèmes rencontrés soient tous résolus.

D'autres difficultés apparaissent au cours du procédé. Le métal fondu peut être coulé dans une lingotière, à la fin de la fusion, ou progressivement retiré sous forme d'un lingot, pendant ce processus. Les premiers de ces procédés peuvent mener à un mélange indésirable entre le métal et son laitier lors de la coulée, alors que les seconds, qui reposent sur l'utilisation de creuset froids, impliquent une solidification du métal près de l'orifice de soutirage du lingot, et donc une grande proximité entre le métal fondu et l'eau de refroidissement, et des dangers accrus d'accidents consécutifs à une rupture du creuset. Dans tous les procédés, il faut aussi maintenir l'étanchéité de l'installation pour éviter la dissémination des vapeurs produites avec la fusion du métal.

L'invention permet de résoudre au moins partiellement ces différentes difficultés. Elle est fondée avant tout sur le besoin d'un procédé de fusion sûr, où les risques d'accidents par écoulement et dispersion du bain fondu, pendant la fusion, à cause d'une rupture du creuset, ou pendant la coulée finale, seront éliminés. On s'est encore préoccupé, en concevant l'invention, d'aboutir à un creuset aux pertes électriques acceptables en même temps que robuste et durable.

On a tout d'abord conservé la conception, usuelle pour les traitements par fusion de déchets de l'énergie nucléaire, d'un creuset ayant une enveloppe métallique. Les enveloppes métalliques ne sont pas sujettes à des ruptures imprévues et il est facile de leur incorporer un circuit de refroidissement, mais les pertes d'énergie électrique par induction y sont excessives, à moins de les construire en secteurs séparés par des joints isolants, ainsi qu'on l'a vu ; mais la protection des joints à proximité du bain fondu doit être assurée.

Une idée caractéristique de l'invention a donc été de dissocier le dispositif entre l'enveloppe ainsi construite et un récipient intérieur à l'enveloppe qui constitue désormais le creuset. Ce dernier comporte une couche interne réfractaire, une couche externe métallique, et en général une couche intermédiaire. La couche interne assure le confinement de la matière en fusion malgré les températures atteintes, la couche externe assure la résistance mécanique et la cohésion du creuset contre les risques de rupture de la matière réfractaire, et la couche intermédiaire est choisie pour absorber les dilatations thermiques différentielles et si possible pour procurer une isolation thermique protégeant le métal de la couche externe d'échauffements excessifs. Le creuset est continu en circonférence, contrairement à l'enveloppe, afin de garantir sa cohésion et son imperméabilité. La couche externe subit alors des pertes électriques qui pourraient être importantes, mais qui sont en réalité acceptables et même faibles, à condition de respecter certaines règles de dimensionnement découvertes par les Inventeurs. Et le creuset, dont la structure est simple, peut être dédié à une charge unique, et servir de récipient définitif à cette charge après la fusion : il est soulevé hors de l'enveloppe et emporté, puis remplacé par un creuset neuf pour la charge suivante. L'étape délicate de coulée des déchets fondus disparaît, et la continuité de structure du creuset reste appréciable pour garantir le confinement des déchets et s'opposer aux fuites de rayonnements. Les creusets pleins sont simplement descendus dans des récipients étanches de stockage prévus pour eux. Le creuset est monté dans l'enveloppe avec un jeu qui subsiste à toutes les températures, puisque la couche externe du creuset et l'enveloppe sont normalement en métaux identiques, ou similaires quant aux coefficients de dilatation.

La division du dispositif en deux parties emboîtées l'une dans l'autre (creuset et enveloppe) a déjà été pratiquée et exposée dans US-7 197 061-B, où toutefois l'enveloppe et le creuset sont tous deux en matière réfractaire, ce qui est exclu ici pour des applications exigeant une grande sécurité, et dans DE-22 43 769-A, dont le contenu est analogue.

L'invention concerne donc, sous une forme générale, un four de fusion de déchets métalliques à induction, à faible consommation énergétique et à haut niveau de sécurité, comprenant un inducteur, une enveloppe métallique circulaire divisée en secteurs séparés par des couches isolantes de l'électricité, entourée par l'inducteur et munie de conduits de fluide de refroidissement, une sole s'étendant sous l'enveloppe, caractérisé en ce qu'il comprend un creuset intérieur à l'enveloppe et constitué d'une paroi circulaire et d'un fond, le creuset étant posé sur la sole, entouré par l'enveloppe, et séparé de l'enveloppe par un jeu, continu et homogène en circonférence et composé de trois couches concentriques dont une couche interne réfractaire, une couche intermédiaire composée d'une matière compressible et une couche externe métallique.

Le procédé typique de l'invention, utilisant ce four, est caractérisé en ce que les déchets sont laissés jusqu'à solidification dans le creuset, après y avoir été versés et fondus, et le creuset est ensuite retiré et entreposé avec les déchets.

La couche interne résiste à la chaleur du bain fondu avec laquelle elle est en contact, la couche externe contribue à la cohésion du creuset, et la couche intermédiaire limite les transferts thermiques vers l'extérieur. La couche interne doit résister à la corrosion par le métal liquide pendant une durée limitée (de quelques heures à quelques jours) ; elle peut être en céramique (à base de carbure de silicium par exemple) ; la couche intermédiaire peut être en matière compressible (afin d'absorber les dilatations thermiques différentielles sans contraintes dans le creuset), et la couche externe, de préférence - tout comme l'enveloppe métallique - en un métal mauvais conducteur de l'électricité, afin d'y réduire les courants induits.

La sole peut être disjointe de l'enveloppe, afin de pouvoir être abaissée et de découvrir le creuset, après la solidification, ce qui permet de le retirer sans difficulté.

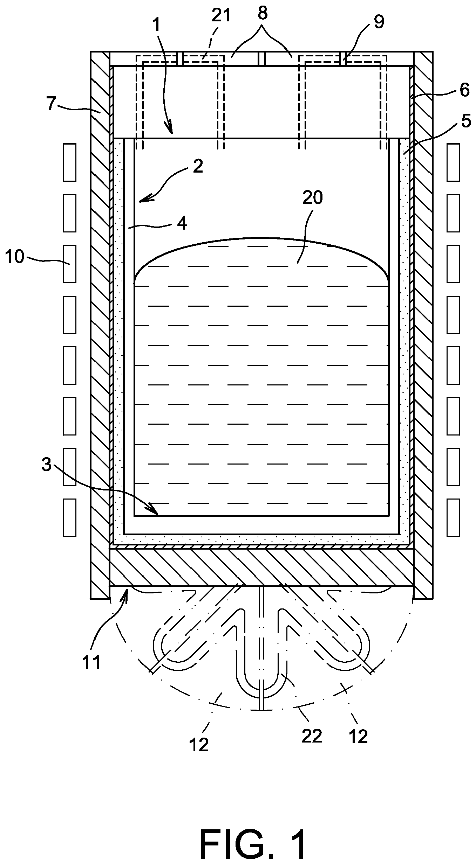

Les différents aspects de l'invention seront maintenant décrits plus complètement en liaison à la Figure unique, qui représente une réalisation donnée à simple titre illustratif.

Le dispositif de fusion comprend un creuset 1 multicouche, comprenant une paroi latérale 2 cylindrique et un fond 3 joint à ladite paroi latérale 2. La paroi latérale 2 et le fond 3 comprennent chacun trois couches en allant de l'intérieur vers l'extérieur, et d'abord une couche interne 4 de matériau résistant à la corrosion par le métal du bain fondu 20, présent dans le creuset 1, pendant la durée de l'opération, typiquement de quelques heures; ce matériau doit être peu conducteur de l'électricité pour ne pas trop écranter le champ électromagnétique induit, destiné à chauffer la charge du creuset. Le creuset 1 comprend encore une couche intermédiaire 5, en isolant thermique, pour limiter le flux thermique vers l'extérieur; l'isolant est un peu compressible, sans perdre ses propriétés d'isolation thermique, pour s'adapter aux dilatations différentielles entre la couche interne 4 et une couche externe 6 entre lesquelles il est intercalé ; il peut s'agir d'un feutre composé de fibres réfractaires. Enfin, la couche externe 6 sert à la délimitation et à la manipulation du creuset 1; elle est métallique, de nouveau en un métal qui n'est pas très bon conducteur électrique ; n'étant pas en contact avec le métal fondu 20 et étant à une température moins chaude que la couche interne 4, elle servira de barrière de confinement, en cas de rupture de cette dernière.

Le creuset 1 est placé dans un four constitué d'abord d'une enveloppe 7 circulaire, qui entoure le creuset 1 et maintient sa surface extérieure à une température aussi faible que possible, de quelques centaines de degrés. L'enveloppe 7 est aussi en un métal peu conducteur de l'électricité. Afin de réduire encore les pertes de champ magnétique, l'enveloppe 7 est avantageusement divisée en secteurs 8, s'étendant sur des secteurs de cercle et séparés par des joints isolants 9, ainsi qu'il est connu dans l'art antérieur, ce qui supprime presque complètement les courants induits. Le refroidissement peut être assuré par une circulation interne d'eau, ou même d'air, par des canaux non représentés, creusés dans les secteurs 8. La puissance perdue dans les secteurs 8 devient négligeable si le diamètre équivalent de chaque secteur 8 (diamètre équivalent D calculé à partir de la surface S de sa section, D = (4 . S / Π)^{0,5}) est inférieur à la moitié de la profondeur de pénétration P des courants induits dans le matériau constitutif des secteurs (P = 503 (résistivité du matériau du secteur / fréquence des courants induits)^{0,5}). L'enveloppe 7 assure le confinement du métal fondu en cas de rupture du creuset 1. L'enveloppe 7 se prête bien à l'étanchéité à l'égard des gaz produits par la fusion de la charge du creuset 1, et elle peut être complétée à cette fin par un couvercle, non représenté, posé sur elle. On souligne que le creuset 1 est en revanche non sectorisé mais continu et homogène sur sa circonférence, ce qui lui permet de bien résister au bain fondu.

Un solénoïde inducteur 10 entoure l'enveloppe 7 ; il est alimenté par du courant alternatif et crée le champ électromagnétique de chauffage de la charge, jusqu'à la liquéfaction.

On va maintenant développer la façon dont le dispositif est optimisé quant à la modération des pertes électriques, essentiellement dans la couche externe 6 de l'enveloppe 7. Pour évaluer la fréquence à partir de laquelle la puissance perdue dans l'enveloppe 7 est négligeable, des mesures de résistance ont été effectuées à différentes fréquences sur une enveloppe 7 sectorisée.

L'enveloppe est constituée de 32 secteurs de diamètre équivalent égal à 2,4 cm et de hauteur 40 cm, formant un cylindre de diamètre intérieur 33,2 cm. Les secteurs 8 sont constitués d'acier inoxydable de résistivité 70.10⁻⁸ Ohm.m.

Cette enveloppe 7 est entourée d'un inducteur 10 de 17 spires de diamètre intérieur 38 cm, et de hauteur 30 cm. Sa section est égale à 50 mm².

La résistance de cette enveloppe 7 vue par l'inducteur 10 et donc la puissance qui y est dissipée a été mesurée à différentes fréquences et comparée à la résistance de l'inducteur 10 et donc à la puissance dissipée dans l'inducteur 10 (Tableau 1).

**Tableau 1**

| FREQUENCE EN Hz | RESISTANCE DE L'INDUCTEUR EN m.Ω | RESISTANCE DE L'ENVELOPPE EN m.Ω | RAPPORT RESISTANCE DE L'ENVELOPPE SUR RESISTANCE DE L'INDUCTEUR | PROFONDEUR DE PENETRATION DES COURANTS DANS L'ENVELOPPE EN cm | |
|---|---|---|---|---|---|
| 30 | 6,84 | 0 | 0 | 7,68 | |
| 50 | 6,95 | 0 | 0 | 5,95 | |
| 60 | 7 | 0 | 0 | 5,43 | |
| 80 | 7 | 0,02 | 0,003 | 4,71 | |
| 100 | 7 | 0,06 | 0,009 | 4,21 | |
| 120 | 6,85 | 0,12 | 0,017 | 3,84 | |
| 140 | 6,76 | 0,18 | 0,027 | 3,56 | |
| 160 | 6,88 | 0,23 | 0,033 | 3,33 | |
| 180 | 7,03 | 0,27 | 0,038 | 3,14 | |
| 200 | 7 | 0,32 | 0,045 | 2,98 | |
| 400 | 7 | 1,10 | 0,157 | 2,1 | |
| 800 | 7,3 | 4,74 | 0,649 | 1,49 | |
| 1600 | 7 | 18,5 | 2,643 | 1,05 | |

On peut constater que la puissance perdue dans l'enveloppe 7 sectorisée devient négligeable (inférieure à 0,3 % de la puissance perdue dans l'inducteur non optimisé) quand la profondeur de pénétration des courants induits est supérieure à deux fois le diamètre équivalent des secteurs.

Un spécialiste de l'induction aurait pu penser qu'il suffisait que la profondeur de pénétration des courants induits soit égale au diamètre équivalent des secteurs 8 pour minimiser les pertes, or on constate qu'a 200 Hz (pour une profondeur de pénétration des courants induits égale à 2,98 cm à comparer aux 2,4 cm de diamètre équivalent des secteurs 8) la puissance perdue dans l'enveloppe 7 est encore égale à 4,54 % de celle perdue dans l'inducteur 10, soit 15 fois plus forte qu'à 80Hz.

Le four comprend encore une sole 11 sur laquelle est posé le creuset 1. La sole 11 peut être aussi divisée en secteurs 12 afin d'éviter les pertes d'énergie électromagnétique. Les secteurs 12 sont creusés de canaux 22 de circulation de fluide, afin de les refroidir. Le creuset 1 est logé dans l'enveloppe 7 avec du jeu à froid, c'est-à-dire avant le début du chauffage ou après le refroidissement du creuset 1, et la sole 11 est aussi disposée dans l'enveloppe 7 avec du jeu, ce qui permet de l'élever et l'abaisser à volonté par un dispositif quelconque, de manière à pouvoir faire sortir le creuset 1 de l'enveloppe 7 par le haut ou par le bas. A chaud lors de la fusion, ce jeu est rattrapé par la dilatation du creuset 1 qui vient en contact avec l'enveloppe 7, ce qui permet d'améliorer le refroidissement du creuset 1 et d'éviter sa surchauffe.

Le procédé de traitement des déchets est le suivant. Ils sont d'abord versés dans le creuset 1, puis le solénoïde 10 est mis en marche pour induire un champ électromagnétique, qui induit à son tour des courants induits dans la charge, qui la chauffent jusqu'à la liquéfier. Le bain fondu 20 est maintenu aussi longtemps que nécessaire, puis il est laissé à refroidir jusqu'à se solidifier en un lingot. De façon caractéristique de l'invention, le creuset 1 est ensuite sorti du four et entreposé avec le lingot dans un conteneur approprié. On évite ainsi une coulée du bain fondu 20 ou une sortie progressive d'un lingot solidifié, et, entre autres, les difficultés consécutives au maintien de l'étanchéité à l'égard des gaz. Un contact accidentel entre le bain fondu 20 et l'eau des conduits de refroidissement 21 et 22 est extrêmement improbable, grâce à la multiplicité des couches et à la température plus basse des couches externes, qui réduirait la corrosion et les risques d'accidents même après une rupture de la couche interne 4. Le traitement du laitier au sommet du bain fondu 20 est facile, en l'absence de mouvements de perturbations. Une température assez élevée peut être acceptée pour la couche interne 4, même au prix d'une corrosion plus intense, puisque le creuset 1 est à usage unique et que sa durée de fonctionnement est courte (de quelques heures à quelques jours). La couche interne 4 peut donc avoir une faible durée de vie. La couche intermédiaire 5 limite les pertes thermiques vers l'enveloppe 7 et la sole 12 refroidie, ce qui autorise une puissance de chauffage moindre. Les dilatations différentielles produisent des contraintes beaucoup moins importantes, grâce au jeu entre le creuset 1 et l'enveloppe 7 et à la présence de la couche intermédiaire 5 compressible.

Dans un mode de réalisation particulier, la couche interne 4 était en céramique, à base de carbure de silicium, de diamètre intérieur 330 mm, de hauteur 1050 mm et d'épaisseur 25 mm. La couche intermédiaire 5 était en fibres minérales d'épaisseur de 10 mm et de hauteur de 1050 mm. La couche externe 6 était en acier inoxydable, d'épaisseur 5 mm et de hauteur 1050 mm. L'enveloppe 7 avait un diamètre intérieur de 412 mm, une épaisseur de 20 mm et comprenait trente secteurs 8, séparés par 3 mm d'isolant électrique pour les joints 9, et une hauteur de 1 300 mm. La dilatation différentielle de la couche externe 6 permettait de rattraper le jeu de 2 mm entre le creuset 1 et l'enveloppe 7, pour une température d'environ 300° de cette couche externe 6.

Le solénoïde 10 avait un diamètre intérieur de 500 mm et une hauteur de 500 mm, et était alimenté à une fréquence d'environ 50 Hz. Il comportait cinq spires et était mobile en hauteur pour suivre la montée de niveau du bain fondu 20. La profondeur de pénétration des courants induits avec une telle fréquence était de 7 cm dans l'acier inoxydable. Un rayon d'au moins 10 cm pour le bain fondu 20 (il est ici de 16,5 cm) permettra alors d'obtenir un bon rendement de chauffage électromagnétique, en évitant de produire des courants induits antagonistes au-delà du centre du bain fondu 20.

La sole 11 avait un diamètre extérieur de 412 mm et se trouvait à environ 20 mm plus bas que le bas du solénoïde 10. Elle était en acier inoxydable.

Pour une capacité de fusion de l'ordre de 60 kg à l'heure, à environ 1450°C, la puissance inductive nécessaire était égale à environ 230 kW, obtenue en appliquant une tension d'environ 45 Volts, aux bornes du solénoïde 10. La puissance thermique à évacuer dans l'inducteur était alors d'environ 68 kW. La puissance thermique perdue par effet Joule dans la couche externe 6 du creuset 1 était de l'ordre de 48 kW, ce qui est acceptable. La durée de l'opération de fusion est alors de l'ordre de 12 heures, ce qui est compatible avec la résistance à la corrosion de la céramique utilisée.

Les avantages suivants sont obtenus. En séparant le creuset proprement dit de l'enveloppe métallique extérieure, soumise au refroidissement, les dilatations différentielles thermiques sont réduites aussi bien dans l'une que dans l'autre. Le creuset proprement dit devient une partie remplaçable et consommable après chaque fusion, alors que l'enveloppe métallique cesse d'être en contact avec le métal fondu et n'est donc pas soumise à la corrosion. Si la chaleur du métal fondu est responsable d'un accident, la rupture concerne le creuset, et l'enveloppe métallique, abritant les conduits de refroidissement, reste intègre. L'enveloppe peut être divisée en secteurs sans inconvénient, puisque la surface du creuset reste continue quant à elle. En maintenant les déchets dans le creuset jusqu'à la solidification, il est possible d'évacuer les vapeurs avant de sortir le creuset de l'enveloppe et de disposer des déchets solidifiés, de sorte que l'étanchéité du four peut être maintenue sans la moindre difficulté. Il est enfin manifeste que l'enlèvement et l'entreposage du lingot sont extrêmement faciles, puisqu'il suffit de manipuler le creuset.

## Revendications

1. Four de fusion de déchets métalliques à induction, à faible consommation énergétique et à haut niveau de sécurité, comprenant un inducteur (10), une enveloppe (7) métallique circulaire divisée en secteurs (8) séparés par des couches isolantes de l'électricité, entourée par l'inducteur et munie de conduits (21) de fluide de refroidissement, une sole (11) s'étendant sous l'enveloppe, **caractérisé en ce qu'**il comprend un creuset (1) intérieur à l'enveloppe (7) et constitué d'une paroi circulaire et d'un fond, le creuset étant :
- posé sur la sole (11),
- entouré par l'enveloppe (7),
- séparé de l'enveloppe par un jeu,
- continu et homogène en circonférence et
- composé de trois couches concentriques dont une couche interne (4) réfractaire, une couche intermédiaire (5) composée d'une matière compressible et une couche externe (6) métallique.

2. Four de fusion suivant la revendication 1, **caractérisé en ce que** la couche interne est en céramique, par exemple à base de carbure de silicium.

3. Four de fusion suivant la revendication 1 ou 2, **caractérisé en ce que** la couche intermédiaire est composée d'une matière isolante thermique.

4. Four de fusion suivant l'une quelconque des revendications 1 à 3, **caractérisé en ce que** la couche intermédiaire a une structure fibreuse.

5. Four de fusion l'une quelconque des revendications précédentes, **caractérisé en ce que** les secteurs (8) ont un diamètre équivalent (D) inférieur à la moitié d'une profondeur de pénétration (P) de courants induits dans le matériau constitutif.

6. Procédé de traitement de déchets métalliques à entreposer, dans lequel un four suivant l'une quelconque des revendications précédentes est utilisé, les déchets étant versés dans le creuset (1) et l'inducteur (10) mis en route pour fondre les déchets, **caractérisé en ce que** les déchets sont laissés jusqu'à solidification dans le creuset, et le creuset (1) est ensuite retiré et entreposé avec les déchets.

## Patentansprüche

1. Induktions-Schmelzofen für metallische Abfälle mit niedrigem Energieverbrauch und hohem Sicherheitsniveau, umfassend einen Induktor (10), ein kreisförmiges metallisches Gehäuse (7), welches in durch elektrisch isolierende Schichten getrennte Sektoren (8) eingeteilt ist, von dem Induktor umgeben ist und mit Kühlfluidleitungen (21) versehen ist, eine Grundplatte (11), welche sich unter dem Gehäuse erstreckt, **dadurch gekennzeichnet, dass** er einen Tiegel (1) umfasst, welcher innerhalb des Gehäuses (7) liegt und aus einer kreisförmigen Wand und einem Boden gebildet ist, wobei der Tiegel:
- auf der Grundplatte (11) angeordnet ist,
- von dem Gehäuse (7) umgeben ist,
- von dem Gehäuse durch einen Freiraum getrennt ist,
- bezüglich seines Umfangs durchgehend und gleichförmig ist, und
- aus drei konzentrischen Schichten gebildet ist, davon eine feuerfeste innere Schicht (4), eine Zwischenschicht (5), welche aus einem komprimierbaren Material aufgebaut ist und eine metallische äußere Schicht (6).

2. Schmelzofen nach Anspruch 1, **dadurch gekennzeichnet, dass** die innere Schicht aus Keramik besteht, beispielsweise auf Grundlage von Siliziumkarbid.

3. Schmelzofen nach Anspruch 1 oder 2, **dadurch gekennzeichnet, dass** die Zwischenschicht aus einem wärmeisolierenden Material aufgebaut ist.

4. Schmelzofen nach einem der Ansprüche 1 bis 3, **dadurch gekennzeichnet, dass** die Zwischenschicht eine Faserstruktur aufweist.

5. Schmelzofen nach einem der vorhergehenden Ansprüche, **dadurch gekennzeichnet, dass** die Sektoren (8) einen äquivalenten Durchmesser (D) aufweisen, welcher kleiner als die Hälfte einer Eindringtiefe (P) von in dem Baumaterial induzierten Strömen ist.

6. Verfahren zum Behandeln von zu lagernden metallischen Abfällen, in welchem ein Ofen nach einem der vorhergehenden Ansprüche verwendet wird, wobei die Abfälle in den Tiegel (1) eingegeben werden und der Induktor (10) zum Schmelzen der Abfälle betrieben wird, **dadurch gekennzeichnet, dass** die Abfälle bis zur Verfestigung in dem Tiegel belassen werden und der Tiegel (1) anschließend entnommen und mit den Abfällen gelagert wird.

## Claims

1. Induction furnace for melting metallic waste, with low energy consumption and high safety level, comprising a field coil (10), a circular metallic casing (7) broken down into sectors (8) separated by electrically insulating layers, surrounded by the field coil and provided with cooling fluid ducts (21), and a sole plate (11) extending under the casing, **characterised in that** it comprises a crucible (1) inside the casing (7) and composed of a circular wall and a bottom, the crucible being:
- placed on the sole plate (11),
- surrounded by the casing (7),
- separated from the casing by a clearance,
- continuous and uniform around its circumference and
- composed of three concentric layers including an internal refractory layer (4), an intermediate layer (5) composed of compressible material and an external metallic layer (6).

2. Melting furnace according to claim 1, **characterised in that** the internal layer is made from ceramic, for example based on silicon carbide.

3. Melting furnace according to claim 1 or 2, **characterised in that** the intermediate layer is made from a thermally insulating material.

4. Melting furnace according to any one of claims 1 to 3, **characterised in that** the intermediate layer has a fibrous structure.

5. Melting furnace according to any one of the previous claims, **characterised in that** the sectors (8) have an equivalent diameter (D) less than half the penetration depth (P) of currents induced in the material from which the sectors are made.

6. Treatment process for metal waste to be stored, in which a furnace according to any one of the previous claims is used, the waste being poured into the crucible (1) and the field coil (10) being started to melt the waste, **characterised in that** waste is left until solidification in the crucible, and the crucible (1) is then removed and put into storage with the waste.
